# EUROPEAN PATENT APPLICATION

(11) **EP 4 671 112 A1**
(43) Date of publication of application: **31.12.2025**
(21) Application number: 25173557.7
(22) Date of filing: 30.04.2025
(51) Int. Cl.: B63G 8/00, B63B 3/13, B22F 3/15, F16J 12/00, F16J 13/02, H01M 50/249, C23C 24/08, H01M 50/207, F16J 13/10

(54) **EXTERNAL PRESSURE VESSELS, SUBMERSIBLE VEHICLES COMPRISING EXTERNAL PRESSURE VESSELS, AND METHOD FOR MANUFACTURING EXTERNAL PRESSURE VESSELS**

(30) Priority: 26.06.2024 US 202418754978
(71) Applicant: The Boeing Company, Arlington, VA 22202 (US)
(72) Inventor: ASTON, Richard W., Arlington, 22202 (US); JAIN, Nicole M., Arlington, 22202 (US); ASTON, Trent M., Arlington, 22202 (US); SCHOENBORN, Nicole D., Arlington, 22202 (US); WIEBER, Trevor J., Arlington, 22202 (US)
(74) Representative: Boult Wade Tennant LLP

(57) **Abstract**

An external pressure vessel including a wall defining an enclosed internal volume, wherein at least a portion of the wall includes a densified cold spray structure.

## Description

### FIELD

The present disclosure generally relates to pressure vessels and, more particularly, to methods for manufacturing external pressure vessels that are resistant to corrosion in seawater and capable of withstanding high pressures.

### BACKGROUND

Deep-water marine structures are constructed to withstand high pressures, which generally requires sophisticated and expensive materials and processes. For example, many conventional submersible vehicles contain large pressure vessels composed of steel or aluminum forgings, which may take up to 36 months to produce. These long lead times hinder the overall efficiency of projects and are financially burdensome. This challenge becomes exponentially more difficult as the size of the structure increases. Accordingly, those skilled in the art continue with research and development efforts in the field of external pressure vessels.

### SUMMARY

Disclosed are external pressure vessels.

In some examples, a disclosed external pressure vessel includes a wall defining an enclosed internal volume, wherein at least a portion of the wall includes a densified cold spray structure.

Also disclosed are submersible vehicles that include at least one external pressure vessel.

In some examples, a disclosed submersible vehicle includes a wet hull defining an internal volume; a plurality of external pressure vessels received in the internal volume of the wet hull, each external pressure vessel of the plurality of external pressure vessels comprising a wall defining an enclosed internal volume, wherein at least a portion of the wall comprises a densified cold spray structure; a battery housed within an external pressure vessel of the plurality of external pressure vessels; an electric motor powered by the battery; and a propeller driven by the electric motor.

Also disclosed are methods for manufacturing external pressure vessels.

In some examples, a disclosed method for manufacturing an external pressure vessel includes: rotating a mandrel in an environment comprising an inert gas; while the mandrel is rotating in the environment, cold spraying a metallic powder onto the mandrel to yield a first intermediate product; removing the mandrel from the first intermediate product to yield a second intermediate product; heat treating the second intermediate product to yield a third intermediate product; and hot isostatic pressing the third intermediate product.

Other examples of the disclosed external pressure vessels, submersible vehicles, and methods for manufacturing external pressure vessels will become apparent from the following detailed description, the accompanying drawings, and the appended claims.

### BRIEF DESCRIPTION OF THE DRAWINGS

Fig. 1 is an isometric view of one example of the disclosed external pressure vessel with a wall having a densified cold spray structure;
Fig. 2A is an isometric view, in cross-section, of the external pressure vessel of Fig. 1;
Fig. 2B is a close-up view, in cross-section, of the flange area of Fig. 2A;
Fig. 2C is a top view of the external pressure vessel of Fig. 1;
Fig. 3 is a micrograph depicting the densified cold spray structure of the wall of the external pressure vessel of Fig. 1;
Fig. 4 is a schematic illustration of one example of the disclosed submersible vehicle;
Fig. 5 is a flow diagram depicting one example of the disclosed method for manufacturing an external pressure vessel;
Fig. 6A is a general schematic illustration of a cold spraying system;
Fig. 6B is a general schematic illustration of the cold spraying nozzle system of Fig. 6A;
Fig. 7 is an isometric view of one example of a first intermediate product;
Fig. 8 is an isometric view of one example of a second intermediate product;
Fig. 9 is a schematic illustration of one example of a heat treating system;
Fig. 10 is a graph showing one example of temperature variation during a heat treating process;
Fig. 11 is a schematic illustration of one example of a hot isostatic pressing system;

### DETAILED DESCRIPTION

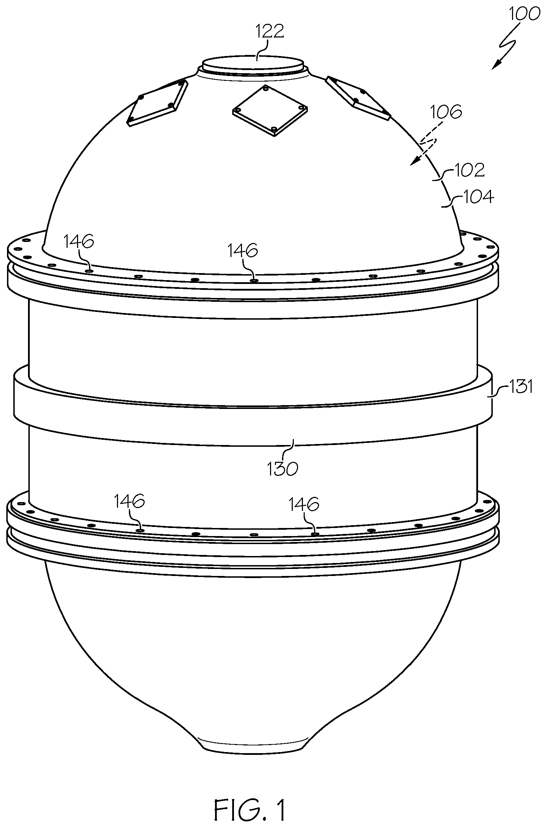

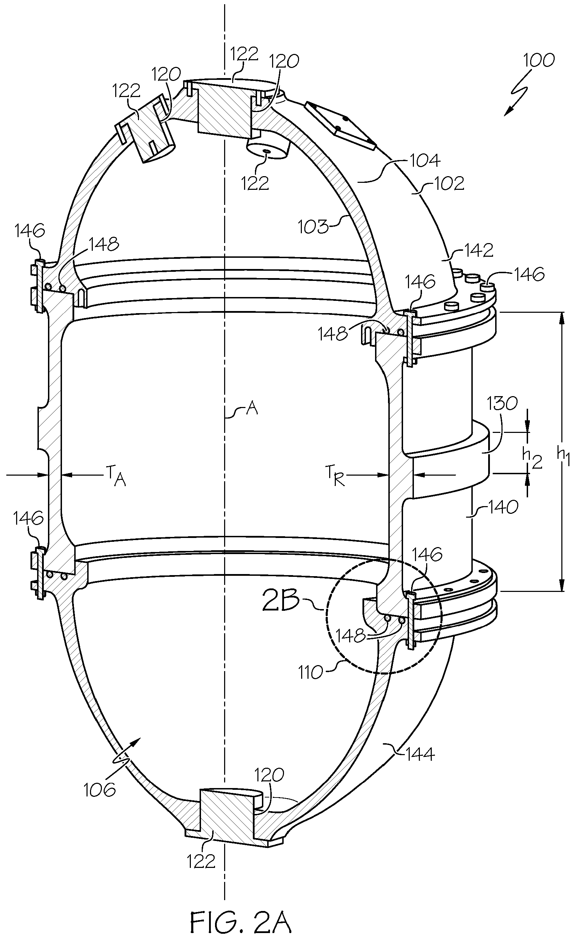

Referring to Figs. 1 and 2A, one example of the disclosed external pressure vessel, generally designated 100, includes a wall 102 having an internal side 103 and an external side 104. The internal side 103 of the wall 102 defines an enclosed internal volume 106 of the external pressure vessel 100.

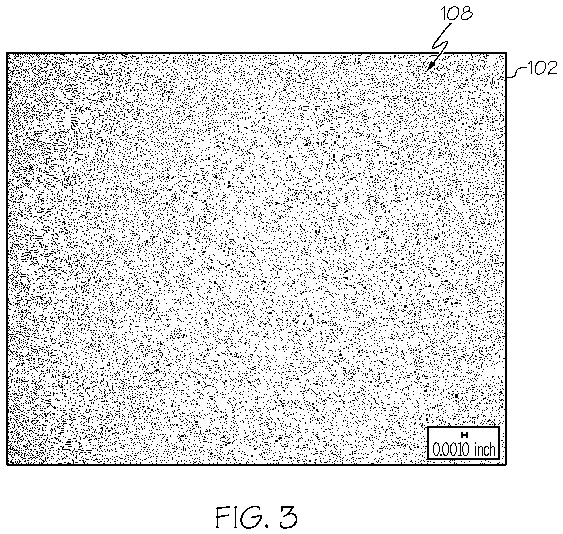

As shown in Fig. 3, the wall 102-or at least a portion of the wall 102-has a densified cold spray structure 108. The densified cold spray structure 108 of the wall 102 of the external pressure vessel 100 may provide structural rigidity, which may allow the external pressure vessel 100 to withstand high external pressures, and may also render the external pressure vessel 100 resistant or substantially resistant to corrosion in seawater.

Many factors may contribute to the ability of the external pressure vessel 100 to withstand high pressures and to be resistant to corrosion in seawater including, but not limited to, material composition, wall thickness, density, internal volume, and shape. Therefore, material composition, wall thickness, density, internal volume, shape, and the like may be factors to consider when designing an external pressure vessel 100 in accordance with the present disclosure.

As noted above, at least a portion of the wall 102 has a densified cold spray structure 108. In some examples, at least 50 percent of the wall 102, based on a total weight of the wall 102, includes the densified cold spray structure 108. In some other examples, at least 60 percent of the wall 102, based on a total weight of the wall 102, includes the densified cold spray structure 108. In some other examples, at least 70 percent of the wall 102, based on a total weight of the wall 102, includes the densified cold spray structure 108. In some other examples, at least 80 percent of the wall 102, based on a total weight of the wall 102, includes the densified cold spray structure 108. In some other examples, at least 90 percent of the wall 102, based on a total weight of the wall 102, includes the densified cold spray structure 108. In yet some other examples, the wall 102, in its entirety (i.e., 100 percent or about 100 percent of the wall 102), includes the densified cold spray structure 108.

When choosing a material for the densified cold spray structure 108, those skilled in the art would consider various factors including, but not limited to, those mentioned above. The densified cold spray structure 108 of the wall 102 of the external pressure vessel 100 may be manufactured from various materials without departing from the scope of the present disclosure, provided the material can serve the purpose of a given project. In some examples, the densified cold spray structure 108 of the wall 102 may be constructed with a metallic material.

The external pressure vessel 100 may be designed to operate in seawater. The corrosive nature of seawater requires the material used to construct the densified cold spray structure 108 of the wall 102 of the external pressure vessel 100 to be resistant or substantially resistant to corrosion while maintaining both high tensile strength and compressive strength. This enables the external pressure vessel to protect internal components from mechanical failure. Generally, metallic materials have such material properties.

Metallic materials that may be particularly suitable for underwater use include, but are not limited to, commercially pure titanium, titanium alloys, and stainless steel. The high strength-to-weight ratios of these materials, as well as their ability to resist corrosion in seawater, make them suitable for use as the densified cold spray structure 108 of the wall 102 of the disclosed external pressure vessel 100.

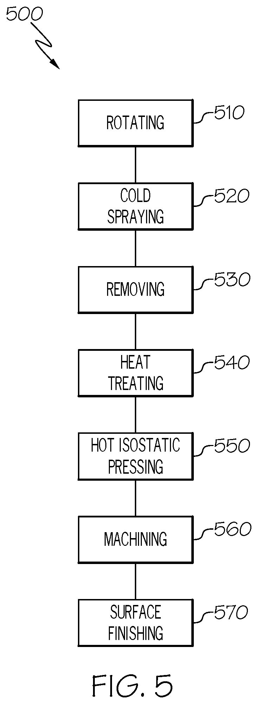

The relative density of the densified cold spray structure 108 may be a design consideration. Due to the nature of cold spraying 520 (Fig. 5), a certain amount of microporosity is inevitable. Such microporosity can be minimized by densification, such as during the disclosed hot isostatic pressing 550 (Fig. 5).

Generally, the higher the relative density, the better the mechanical properties of the densified cold spray structure 108. In some examples, the densified cold spray structure 108 of the wall 102 may have a relative density of at least 95 percent. In some other examples, the densified cold spray structure 108 of the wall 102 may have a density of at least 96 percent. In some other examples, the densified cold spray structure 108 of the wall 102 may have a relative density of at least 97 percent. In some other examples, the densified cold spray structure 108 of the wall 102 may have a relative density of at least 98 percent. In some other examples, the densified cold spray structure 108 of the wall 102 may have a relative density of at least 99 percent. In some other examples, the densified cold spray structure 108 of the wall 102 may have a relative density of at least 99.5 percent. In some other examples, the densified cold spray structure 108 of the wall 102 may have a relative density of at least 99.8 percent.

The wall 102 has an average cross-sectional thickness T_{A}, measured radially, relative to the vertical axis A, extending from the internal side 103 to the external side 104 of the wall 102. The average cross-sectional thickness T_{A} of the wall 102 may also be a design consideration. As external pressures (i.e., pressure acting on the external side 104 of the wall) increase, such as with underwater operating depth, the average cross-sectional thickness T_{A} may increase accordingly. The average cross-sectional thickness T_{A} may also vary depending on the material used and its mechanical properties. Materials with higher strength may not need to be as thick as materials with lower strength to withstand the same pressures.

In some examples, the average cross-sectional thickness T_{A} of the wall 102 may be at least 0.1 centimeters. In some other examples, the average cross-sectional thickness T_{A} of the wall 102 may be at least 0.2 centimeters. In some other examples, the average cross-sectional thickness T_{A} of the wall 102 may be at least 0.4 centimeters. In some other examples, the average cross-sectional thickness T_{A} of the wall 102 may be at least 0.6 centimeters. In some other examples, the average cross-sectional thickness T_{A} of the wall 102 may be at least 0.8 centimeters. In some other examples, the average cross-sectional thickness T_{A} of the wall 102 may be at least 1.0 centimeter. In some other examples, the average cross-sectional thickness T_{A} of the wall 102 may be at least 1.2 centimeters. In some other examples, the average cross-sectional thickness T_{A} of the wall 102 may be at least 1.4 centimeters. In some other examples, the average cross-sectional thickness T_{A} of the wall 102 may be at least 1.6 centimeters. In some other examples, the average cross-sectional thickness T_{A} of the wall 102 may be at least 1.8 centimeters. In some other examples, the average cross-sectional thickness T_{A} of the wall 102 may be at least 2.0 centimeters. In some other examples, the average cross-sectional thickness T_{A} of the wall 102 may be at least 4 centimeters. In some other examples, the average cross-sectional thickness T_{A} of the wall 102 may be at least 6 centimeters. In some other examples, the average cross-sectional thickness T_{A} of the wall 102 may be at least 8 centimeters. In some other examples, the average cross-sectional thickness T_{A} of the wall 102 may range from 0.3 centimeters to 5 centimeters, or from about 0.3 centimeters to about 5 centimeters. In yet some other examples, the average cross-sectional thickness T_{A} of the wall 102 may range from 0.5 centimeters to 10 centimeters, or from about 0.5 centimeters to about 10 centimeters.

The strength of the wall 102 may be increased by adding one or more reinforcement features 130. The reinforcement feature 130 may be integral with the wall 102 (i.e., the reinforcement structure 130 and the wall 102 form a single monolithic body). Use of a reinforcement feature 130 may be advantageous in some cases, as it may require less material for construction and may reduce weight.

In one particular construction, the reinforcement feature 130 may be (or may include) a reinforcement ring 131. The reinforcement ring 131 may be positioned on the external side 104 of the wall 102, and may circumferentially extend about the wall 102 (e.g., about the vertical axis A of the external pressure vessel 100). As noted above, the reinforcement ring 131 may be integral with the wall 102. The average cross-sectional thickness T_{R} of the wall 102 and the reinforcement ring 131, combined, may be greater than or substantially greater than the average cross-sectional thickness T_{A} of the wall 102, alone. In some examples, the average cross-sectional thickness T_{R} of the wall 102 and the reinforcement ring 131, combined, may be at least 1.25 times the average cross-sectional thickness T_{A} of the wall 102, alone. In some other examples, the average cross-sectional thickness T_{R} of the wall 102 and the reinforcement ring 131, combined, may be at least 1.5 times the average cross-sectional thickness T_{A} of the wall 102, alone. In yet some other examples, the average cross-sectional thickness T_{R} of the wall 102 and the reinforcement ring 131, combined, may be at least 2 times the average cross-sectional thickness T_{A} of the wall 102, alone.

In some examples, including the current example, the height h₂ of the reinforcement ring 131 may also contribute to the overall strength of the middle wall segment 140 with a height of h₁. The height h₂ of the reinforcement ring 131 may be at least 10 percent of the height h1 of the wall segment to which reinforcement ring 131 is integral. The height h₂ of the reinforcement ring 131 may be at least 15 percent of the height h1 of the wall segment to which reinforcement ring 131 is integral. The height h₂ of the reinforcement ring 131 may be at least 20 percent of the height h1 of the wall segment to which reinforcement ring 131 is integral. The height h₂ of the reinforcement ring 131 may be at least 25 percent of the height h1 of the wall segment to which reinforcement ring 131 is integral.

High pressures are the main source of stress that the external pressure vessel 100 is expected to withstand. In some examples, the external pressure vessel 100 may be designed to withstand an external pressure load of at least 2 bar without mechanical failure. In some other examples, the external pressure vessel 100 may be designed to withstand an external pressure load of at least 3 bar without mechanical failure. In some other examples, the external pressure vessel 100 may be designed to withstand an external pressure load of at least 4 bar without mechanical failure. In some other examples, the external pressure vessel 100 may be designed to withstand an external pressure load of at least 5 bar without mechanical failure. In some other examples, the external pressure vessel 100 may be designed to withstand an external pressure load of at least 6 bar without mechanical failure. In some other examples, the external pressure vessel 100 may be designed to withstand an external pressure load of at least 7 bar without mechanical failure. In some other examples, the external pressure vessel 100 may be designed to withstand an external pressure load of at least 8 bar without mechanical failure. In some other examples, the external pressure vessel 100 may be designed to withstand an external pressure load of at least 9 bar without mechanical failure. In some other examples, the external pressure vessel 100 may be designed to withstand an external pressure load of at least 10 bar without mechanical failure. In some other examples, the external pressure vessel 100 may be designed to withstand an external pressure load of at least 20 bar without mechanical failure. In some other examples, the external pressure vessel 100 may be designed to withstand an external pressure load of at least 30 bar without mechanical failure. In some other examples, the external pressure vessel 100 may be designed to withstand an external pressure load of at least 40 bar without mechanical failure. In some other examples, the external pressure vessel 100 may be designed to withstand an external pressure load of at least 50 bar without mechanical failure. In some other examples, the external pressure vessel 100 may be designed to withstand an external pressure load of at least 60 bar without mechanical failure. In some other examples, the external pressure vessel 100 may be designed to withstand an external pressure load of at least 70 bar without mechanical failure. In some other examples, the external pressure vessel 100 may be designed to withstand an external pressure load of at least 80 bar without mechanical failure. In some other examples, the external pressure vessel 100 may be designed to withstand an external pressure load of at least 90 bar without mechanical failure. In some other examples, the external pressure vessel 100 may be designed to withstand an external pressure load of at least 100 bar without mechanical failure. In some other examples, the external pressure vessel 100 may be designed to withstand an external pressure load of at least 200 bar without mechanical failure. In some other examples, the external pressure vessel 100 may be designed to withstand an external pressure load of at least 300 bar without mechanical failure. In some other examples, the external pressure vessel 400 may be designed to withstand an external pressure load of at least 3 bar without mechanical failure. In some other examples, the external pressure vessel 100 may be designed to withstand an external pressure load of at least 500 bar without mechanical failure. In some other examples, the external pressure vessel 100 may be designed to withstand an external pressure load of at least 600 bar without mechanical failure. In some other examples, the external pressure vessel 100 may be designed to withstand an external pressure load of at least 700 bar without mechanical failure.

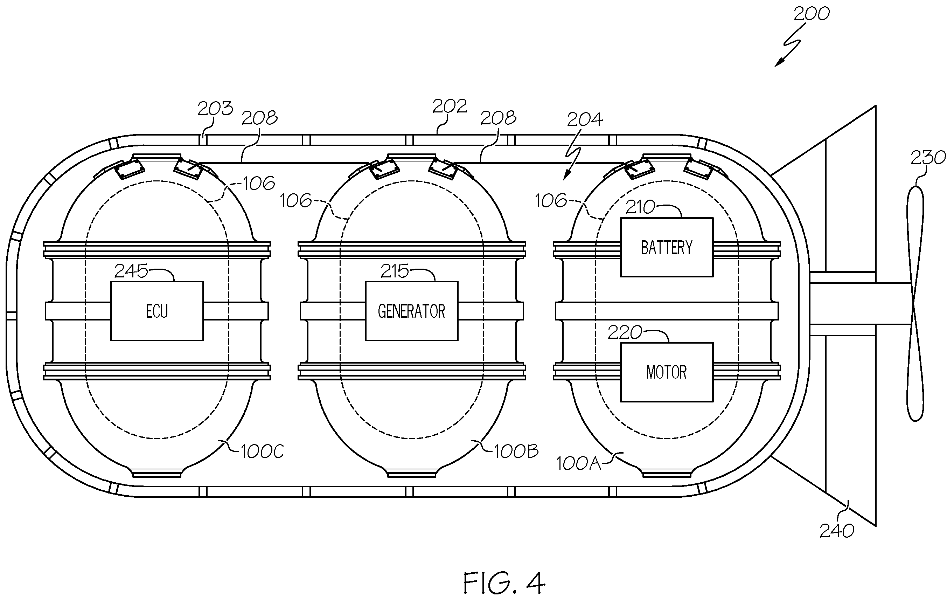

The wall 102 defines the enclosed internal volume 106 of the external pressure vessel 100. The enclosed internal volume 106 of the external pressure vessel 100 is intended to be used to protect various equipment and payloads for a given project from high external pressures. Depending on the size of the item that needs protection from high pressures, the size of the enclosed internal volume 106 must be adjusted and constructed accordingly. In some examples, including an example shown in Fig. 4, a submersible vehicle may need various internal components including, but not limited to, generator 215, battery 210, electric motor 220, and electronic control unit 245. Most of these items are generally not waterproof and should not be exposed to high pressures. Also, all these components vary in size and shape. Thus, the enclosed internal volume 106 that protects these components should be designed accordingly.

In some examples, to fit a person, the enclosed internal volume 106 may be at least 100 liters since the average volume of a human is about 65 liters. For equipment, in some examples, the enclosed internal volume 106 may be at least 50 liters. In some other examples, the enclosed internal volume 106 may be at least 60 liters. In some other examples, the enclosed internal volume 106 may be at least 80 liters. In some other examples, the enclosed internal volume 106 may be at least 100 liters. In some other examples, the enclosed internal volume 106 may be at least 150 liters. In some other examples, the enclosed internal volume 106 may be at least 200 liters. In some other examples, the enclosed internal volume 106 may be at least 300 liters. In some other examples, the enclosed internal volume 106 may be at least 400 liters. In some other examples, the enclosed internal volume 106 may be at least 500 liters. In some other examples, the enclosed internal volume 106 may be at least 600 liters. In some other examples, the enclosed internal volume 106 may be at least 700 liters. In some other examples, the enclosed internal volume 106 may be at least 800 liters. In some other examples, the enclosed internal volume 106 may be at least 900 liters. In some other examples, the enclosed internal volume 106 may be at least 1000 liters. In some other examples, the enclosed internal volume 106 may be at least 1200 liters. In some other examples, the enclosed internal volume 106 may be at least 1400 liters. In some other examples, the enclosed internal volume 106 may be at least 1600 liters. In some other examples, the enclosed internal volume 106 may be at least 1800 liters. In some other examples, the enclosed internal volume 106 may be at least 2000 liters.

The wall 102 of the external pressure vessel 100 may be constructed from at least one wall segment 140, 142, 144. Each wall segment 140, 142, 144 is then connected to an adjacent segment 140, 142, 144 via means that provide sufficient structural rigidity that can withstand external pressures, ensuring the segments remain intact without mechanical failure under high pressures. The means used to connect the segments together include, but are not limited to, welding, adhesive bonding, riveting, and mechanical fasteners 146.

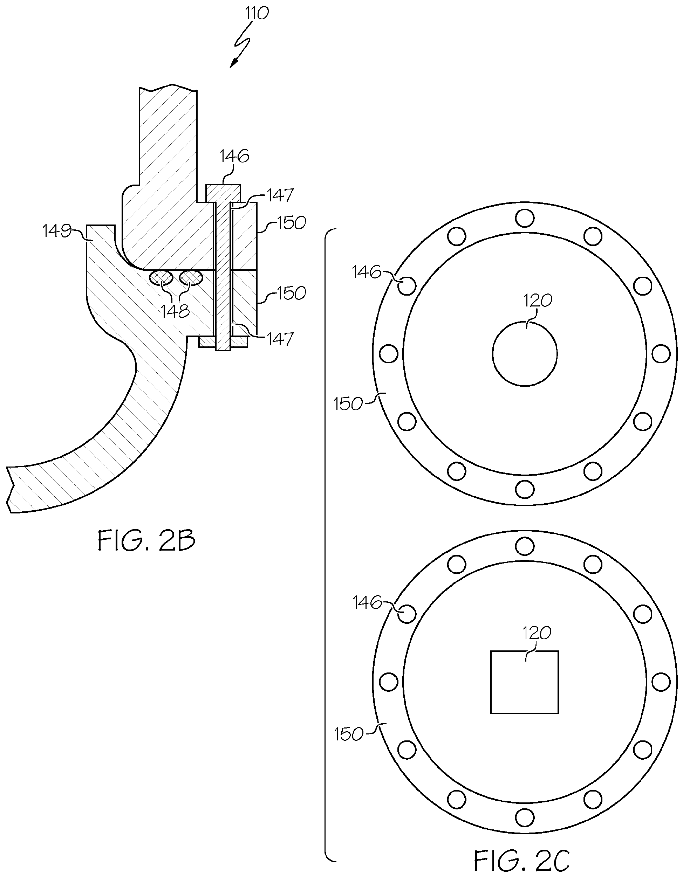

Still referring to Fig. 2A, each wall segment 140, 142, 144 of a plurality of wall segments 140, 142, 144 may be connected to an adjacent wall segment 140, 142, 144 of the plurality of wall segments 140, 142, 144 using a plurality of mechanical fasteners 146 on the flange area 110. Fig. 2B illustrates a close-up cross-sectional view of the flange area 110 of Fig. 2A. As shown, the middle wall segment 140 sits flush on top of the end wall segment 144, guided by the fitting portion 149 of the end wall segment 144. The flanges 150 may have bores 147 for the plurality of mechanical fasteners 146. This plurality of mechanical fasteners 146 include, but not limited to, traditional nuts- and-bolts.

Still referring to Fig. 2A and Fig. 2B, there is at least one seal 148 positioned between adjacent wall segments 140, 142, 144 of the plurality of wall segments 140, 142, 144 acting as a gasket to keep the water out. This ensures that the enclosed internal volume 106 stays dry. In some examples, there may be at least one seals 148 between adjacent wall segments 140 and 142, and between 140 and 144. In some other examples, there may be at least two seals 148 between segments 140 and 142, and 140 and 144. In some other examples, there may be at least three seals 148 between segments 140 and 142, and 140 and 144.

Each wall segment 140, 142, 144 of the plurality of wall segments 140, 142, 144 may take many different forms including, but not limited to, a full vessel shape, a cylinder, a dome, and a simple flat cap. In some examples, at least one wall segment 140, 142, 144 of the plurality of wall segments 140, 142, 144 has an axisymmetric shape including, but not limited to a dome, a disk, a cylinder, and a hollow cylinder. In some other examples, the end wall segments 142 and 144 may be shaped to seal off the enclosed internal volume 106.

Referring to Fig. 2A and Fig. 2C, the wall 102 of the external pressure vessel 100 defines at least one port 120 that provides access to the enclosed internal volume 106. The shape of the port 120 may take various forms including, but not limited to, circular and square.

The size of the port 120 may vary depending on its purpose. In some examples, the port may be used to deliver a payload to the enclosed internal volume 106, which may require a larger port 120. In some other examples, the port 120 may be smaller if the port 120 is used to extend at least one wire from the enclosed internal volume 106 of one external pressure vessel 100 to the enclosed internal volume 106 of another external pressure vessel 100.

In some examples, assuming that the port is circular, the diameter may be at least 0.5 centimeters. In some other examples, assuming that the port is circular, the diameter may be at least 1 centimeter. In some other examples, assuming that the port is circular, the diameter may be at least 1 centimeter. In some other examples, assuming that the port is circular, the diameter may be at least 2 centimeters. In some other examples, assuming that the port is circular, the diameter may be at least 3 centimeters. In some other examples, assuming that the port is circular, the diameter may be at least 4 centimeters. In some other examples, assuming that the port is circular, the diameter may be at least 5 centimeters. In some other examples, assuming that the port is circular, the diameter may be at least 6 centimeters. In some other examples, assuming that the port is circular, the diameter may be at least 7 centimeters. In some other examples, assuming that the port is circular, the diameter may be at least 8 centimeters. In some other examples, assuming that the port is circular, the diameter may be at least 9 centimeters. In some other examples, assuming that the port is circular, the diameter may be at least 10 centimeters. In some other examples, assuming that the port is circular, the diameter may be at least 15 centimeters. In some other examples, assuming that the port is circular, the diameter may be at least 20 centimeters. In some other examples, assuming that the port is circular, the diameter may be at least 25 centimeters. In some other examples, assuming that the port is circular, the diameter may be at least 30 centimeters. In some other examples, assuming that the port is circular, the diameter may be at least 50 centimeters. In some other examples, assuming that the port is circular, the diameter may be at least 70 centimeters. In some other examples, assuming that the port is circular, the diameter may be at least 100 centimeters.

For each port 120, there is a plug 122 that seals off the port 120 watertight. This seal may take various forms including, but not limited to, a simple rubber plug and a mechanical hatch system. The plug 122 shall also provide resistance to corrosion and sufficient resistance to high pressures that the external pressure vessel 100 is designed to withstand. In some examples, the plug 122 is made of rubber in a simple plug form. In some other examples, the port is sealed with the plug 122 that is designed as a mechanical hatch system with mechanical fasteners. In some other examples, the plug 122 may be designed to withstand an external pressure load of at least 10 bar without mechanical failure. In some other examples, the plug 122 may be designed to withstand an external pressure load of at least 30 bar without mechanical failure. In some other examples, the plug 122 may be designed to withstand an external pressure load of at least 50 bar without mechanical failure. In some other examples, the plug 122 may be designed to withstand an external pressure load of at least 100 bar without mechanical failure. In some other examples, the plug 122 may be designed to withstand an external pressure load of at least 150 bar without mechanical failure. In some other examples, the plug 122 may be designed to withstand an external pressure load of at least 200 bar without mechanical failure. In some other examples, the plug 122 may be designed to withstand an external pressure load of at least 250 bar without mechanical failure. In some other examples, the plug 122 may be designed to withstand an external pressure load of at least 300 bar without mechanical failure. In some other examples, the plug 122 may be designed to withstand an external pressure load of at least 400 bar without mechanical failure. In some other examples, the plug 122 may be designed to withstand an external pressure load of at least 500 bar without mechanical failure. In some other examples, the plug 122 may be designed to withstand an external pressure load of at least 600 bar without mechanical failure.

Referring to Fig. 4, the disclosed is an example of a submersible vehicle 200 that includes: a wet hull 202 defining an internal volume 204; a plurality of external pressure vessels 100A, 100B, 100C received in the internal volume 204 of the wet hull 202, each external pressure vessel 100A, 100B, 100C of the plurality of external pressure vessels 100A, 100B, 100C includes a wall 102 defining an enclosed internal volume 106, wherein at least a portion of the wall 102 is a densified cold spray structure 108; a battery 210 housed within an external pressure vessel 100A, 100B, 100C of the plurality of external pressure vessels 100A, 100B, 100C; an electric motor 220 powered by the battery 210; and a propeller 230 driven by the electric motor 220.

The wet hull 202 itself may not be designed to withstand high pressures because the water freely moves in and out through the holes 203, equalizing the pressure inside and outside of the wet hull 202.

Depending on the specific project, numerous combinations and configurations of external pressure vessels 100 and submersible vehicles 200 are possible.

In some examples, the submersible vehicle 200 may carry at least one external pressure vessel 100. In some other examples, the submersible vehicle 200 may carry the plurality of external pressure vessels 100. The plurality of external pressure vessels is placed within the internal volume 204. Each submersible vehicle 200 may contain at least one external pressure vessel 100, and at least one external pressure vessel may contain at least one equipment the submersible vehicle 200 or a given project. The equipment may include, but is not limited to, the generator 215, the battery 210, the electric motor 220, and the electronic control unit 245.

In some other examples, the external pressure vessel 100 may contain both the battery 210 and the electric motor 220, while one of the adjacent external pressure vessels 100 contains the generator 215 that charges the battery in the first external pressure vessel 100. Another adjacent external pressure vessel 100 may contain the electronic control unit that controls the submersible vehicle 200 by controlling a propellant system of the submersible vehicle 200 including, but not limited to, a rudder 240 and a propeller 230.

In some other examples, two or more different external pressure vessels 100 may be connected through the ports 120 and a wiring system 208. This connection enables the external pressure vessels 100A, 100B, 100C to communicate with each other for controlling the submersible vehicle 200 or any other functionality required for a given project.

Referring now to Fig. 5, disclosed is an example of a method 500 for manufacturing an external pressure vessel 100. The method 500 includes, but not limited to: rotating 510 a mandrel in an environment comprising an inert gas; while the mandrel is rotating in the environment, cold spraying 520 a metallic powder onto the mandrel to yield a first intermediate product 700; removing 530 the mandrel from the first intermediate product 700 to yield a second intermediate product 800; heat treating 540 the second intermediate product 800 to yield a third intermediate product 1130; and hot isostatic pressing 550 the third intermediate product to yield a fourth intermediate product.

An important aspect of the densified cold spray structure 108 of the wall 102 is its densified property, which provides higher strength compared to a structure without any densifying manufacturing step. Due to the nature of cold spraying 520, a certain amount of microporosity is inevitable. This can result in lower mechanical properties including, but not limited to, reduced strength and fatigue resistance. However, it may be possible to mitigate this downside of cold spraying 520 by densifying the material through additional steps including, but not limited to, heat treating 540 and hot isostatic pressing 550. These additional steps may improve the relative density of the densified cold spray structure 108, bringing its mechanical properties closer to those of the original metal at 100 percent relative density.

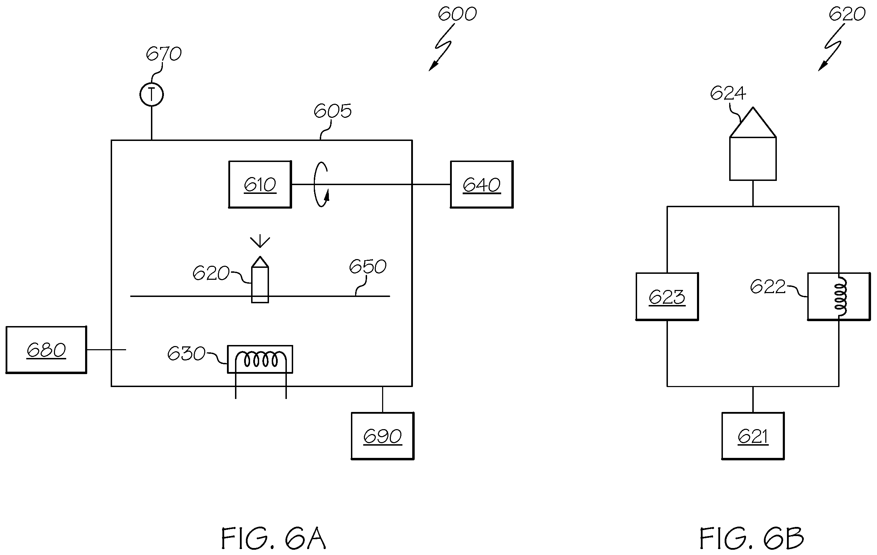

Fig. 6A illustrates a general schematic of a cold spraying system 600. The first step of the method 500 may involve a motor 640 rotating 510 a mandrel 610 shaped roughly like a desired general shape in an environment that may include an inert gas which is provided through an inert gas feeder 680 into a chamber 605. The shape of the mandrel 610 may determine the shape of the first intermediate product. The environment is temperature controlled by a heater 630 and a temperature gauge 670. While the mandrel 610 is rotating 510, a cold spraying nozzle system 620 that moves along a track 650-parallelly oriented with the rotating 510 axis-may start spraying heated and accelerated metallic powder. Every relevant parameter including, but not limited to, rotating speed of the mandrel 610, linear travel speed of the cold spraying nozzle system 620, and the temperature of the chamber 605 may be regulated by a control unit 690. Precise control of these parameters is critical to achieve consistent microstructure of the densified cold spray structure 108.

Fig. 6B illustrates an example of the cold spraying nozzle system 620. the propellent gas which typically includes, but is not limited to, nitrogen and helium, supplied by a high-pressured propellant gas supply 621, goes through a metallic power feeder 623 and a heater 622. The heated and accelerated metallic powder is then sprayed through a nozzle 624 of the cold spraying nozzle system 620 on to the rotating 510 mandrel 610.

The amount of material deposited onto the mandrel 610 is determined by the amount of metallic powder sprayed by the cold spraying nozzle system 620. A higher deposition rate results in a faster completion of cold spraying 520. In some examples, the cold spraying nozzle system 620 may have a deposition rate of at least 1.0 kg/hour. In some other examples, the cold spraying nozzle system 620 may have a deposition rate of at least 2.0 kg/hour. In some other examples, the cold spraying nozzle system 620 may have a deposition rate of at least 3.0 kg/hour. In some other examples, the cold spraying nozzle system 620 may have a deposition rate of at least 4.0 kg/hour. In some other examples, the cold spraying nozzle system 620 may have a deposition rate of at least 5.0 kg/hour.

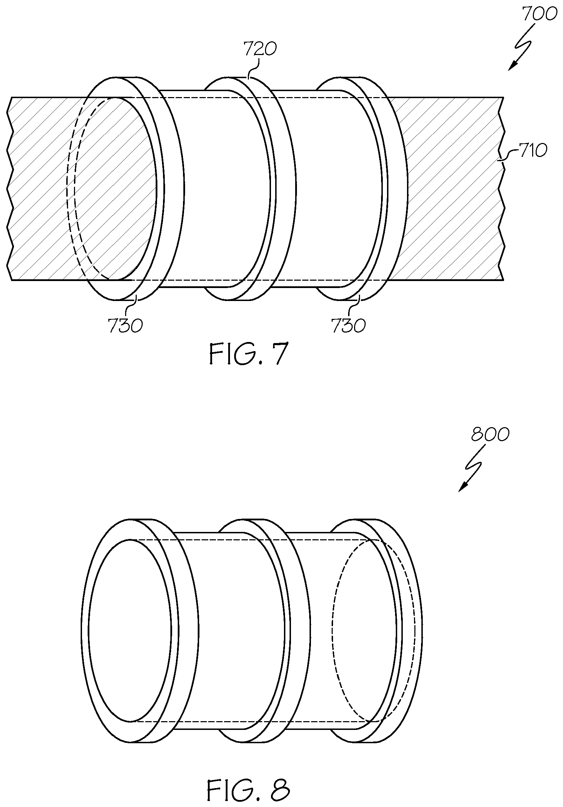

The rotating 510 and the cold spraying 520 together yield a first intermediate product 700 which is illustrated in Fig. 7. In some examples, including this example, the first intermediate product 700 involves both a constructed segment 705, which is in a form of a hollow cylinder, and a mandrel 710. The constructed segment 705 has an integrated reinforcement ring 720 and flanges 730.

It is important to note that the mandrel 710 has a composition that is different from a composition of the metallic powder used for the cold spraying 520. Those skilled in the art may choose an appropriate mandrel material depending on the method 500. The appropriate mandrel material may include, but not limited to, aluminum, aluminum alloy, copper, steel, and ceramics. For the cold spraying 520, the metallic powder that is resistant or substantially resistant to corrosion in seawater may include, but not limited to, commercially pure titanium, titanium alloy and stainless steel. Through diffusion bonding and other mechanical deformation under high speed and heat, titanium particles start to adhere to the surface of the mandrel 710 until it reaches a desired thickness forming the constructed segment 705.

In some examples, the propellant gas is heated to at least 30 percent of a melting point of the metallic powder while accelerating the metallic powder to at least 300 m/s. In some other examples, the propellant gas is heated at least 40 percent of a melting point of the metallic powder while accelerating the metallic powder to at least 500 m/s. In some other examples, the propellant gas is heated at least 50 percent of a melting point of the metallic powder while accelerating the metallic powder to at least 700 m/s. In some other examples, the propellant gas is heated at least 60 percent of a melting point of the metallic powder while accelerating the metallic powder to at least 900 m/s. In some other examples, the propellant gas is heated at least 70 percent of a melting point of the metallic powder while accelerating the metallic powder to at least 1200 m/s.

Surface speed is a combination of the rotating 510 speed, the linear travel speed of the nozzle 624, and powder feed rate. In some examples, the surface speed may range from 0.2 m/s to 1 m/s, or from 0.2 m/s to about 1 m/s. In some other examples, the cold spraying 520 is performed at the surface speed of at least 0.05 m/s. In some other examples, the cold spraying 520 is performed at the surface speed of at least 0.1 m/s. In some other examples, the cold spraying 520 is performed at the surface speed of at least 0.2 m/s. In some other examples, the cold spraying 520 is performed at the surface speed of at least 0.3 m/s. In some other examples, the cold spraying 520 is performed at the surface speed of at least 0.4 m/s. In some other examples, the cold spraying 520 is performed at the surface speed of at least 0.5 m/s. In some other examples, the cold spraying 520 is performed at the surface speed of at least 0.6 m/s. In some other examples, the cold spraying 520 is performed at the surface speed of at least 0.7 m/s. In some other examples, the cold spraying 520 is performed at the surface speed of at least 0.8 m/s. In some other examples, the cold spraying 520 is performed at the surface speed of at least 0.9 m/s. In some other examples, the cold spraying 520 is performed at the surface speed of at least 1 m/s. In some other examples, the cold spraying 520 is performed at the surface speed of at least 1.2 m/s.

In some other examples, the cold spraying 520 may be done with Oerlikon Metco 4010C with 0.3 wt% of Oxygen sprayed with a surface speed of 0.5 m/s in a chamber 605 that is held at 1050 °C. This commercially pure titanium, Metco 4010C, is available through Oerlikon Metco, Pfaeffikon, Switzerland.

The next step of the method 500 may involve removing 530 the mandrel 710 from the first intermediate product 700 to yield a second intermediate product 800 in Fig. 8. The technique for removing 530 may vary depending on the material of the mandrel 710. In some examples, the mandrel 710 may be removed by dissolving the mandrel 710 in an appropriate fluid, such as an acid solution.

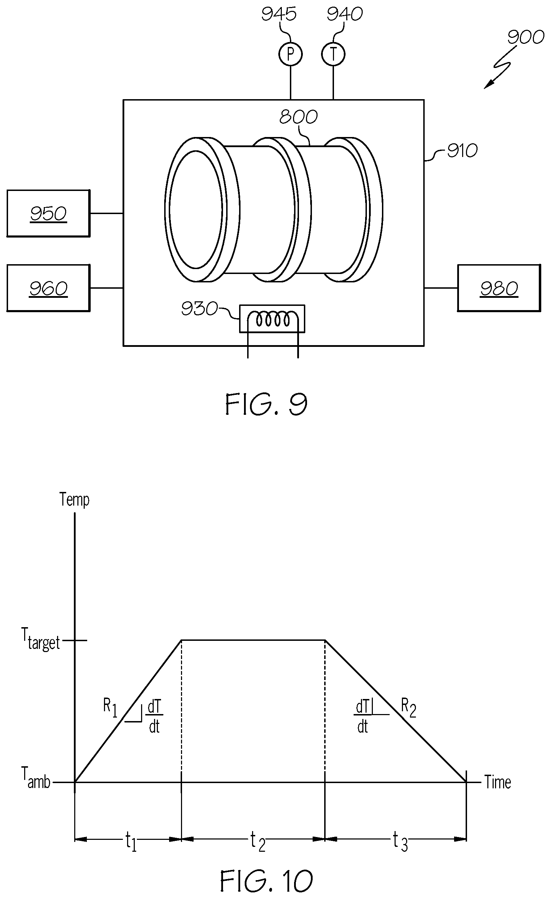

After the removing 530, the second intermediate product 800 may undergo heat treating 540 to yield a third intermediate product. Fig. 9 illustrates a general heat treating system 900. In some examples, including this example, the second intermediate product 800 is placed in a heat treating chamber 910 that is temperature regulated by a heater 930 and a temperature gauge 940. The heat treating environment may be vacuum, achieved by a vacuum pump 950 that can reach at least 10⁻⁴ mbar, which is measured by a pressure gauge 945, and the cooling environment may be 1 bar nitrogen, fed from a coolant gas feeder 960. All relevant parameters may be controlled by a control unit 980.

Those skilled in the art may choose a temperature and a duration based on the material used and how much heat treating 540 is necessary before hot isostatic pressing 550. Referring to Fig 10, the heat treating 540 may involve controlled heating to a target temperature T_{target} according to a predefined heating rate R₁ for a certain amount of time t₁, holding at the target temperature T_{target} for a predetermined amount of time t₂, and cooling to room temperature according to a predefined cooling rate R₂ for a certain amount of time t₃ until it completely cools down to ambient temperature T_{amb}.

The specific temperatures and time depend on the desired properties, such as improved adhesion, reduced porosity, and enhanced mechanical strength. Higher temperatures and longer durations may enhance bonding and result in better mechanical properties but may also lead to grain growth or other undesired effects. It is essential to optimize these parameters based on the specific application and desired outcomes.

In some examples, the second intermediate product may undergo the heat treating 540 at the temperature of at least 650 °C for the duration of at least 1 hour before holding and cooling to room temperature according to a predefined cooling rate. In some other examples, the second intermediate product may undergo heat treating 540 at the temperature of at least 700 °C for the duration of at least 3 hours before holding and cooling to room temperature according to a predefined cooling rate. In some other examples, the second intermediate product may undergo heat treating 540 at the temperature of at least 800 °C for the duration of at least 4 hours before holding and cooling to room temperature according to a predefined cooling rate. In some other examples, the second intermediate product may undergo heat treating 540 at the temperature of at least 830 °C for the duration of at least 5 hours before holding and cooling to room temperature according to a predefined cooling rate. In some other examples, the second intermediate product may undergo heat treating 540 at the temperature of at least 850 °C for the duration of at least 6 hours before holding and cooling to room temperature according to a predefined cooling rate.

Several different heating and cooling rates may be used for one heat treating 540. In some examples, the temperature may be increased at a rate of 8 °C/min to 1050 °C and then increased to 1100 °C at a rate of 2°C/min. Then it may be held at 1100 °C for 140±20 minutes. The cooling may also involve two steps: vacuum cooling to 500 °C followed by 1 bar nitrogen cooling.

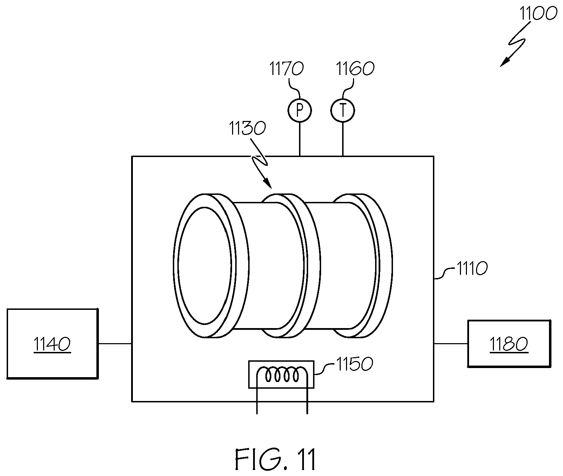

The next step of the method 500 may involve hot isostatic pressing 550 to yield a fourth intermediate product. The hot isostatic pressing 550 involves using an inert gas at high pressures and an elevated temperature. Fig. 11 illustrates an example of a hot isostatic pressing system 1100. In some examples, including this example, a third intermediate product 1130 is place in a chamber 1110. A pressurized inert gas, selected from the group consisting of nitrogen, argon, helium, neon, and combination thereof, fills the chamber 1110 through a pressurized inert gas supply 1140. The environment is heated by a heater 1150. The overall temperature and pressure are monitored and regulated by a temperature gauge 1160, a pressure gauge 1170, and a control unit 1180.

Through the hot isostatic pressing 550 by the hot isostatic pressing system 1100, the fourth intermediate product may achieve superior material properties compared to the third intermediate product 1130 by eliminating the porosity resulting from cold spraying 520.

Pressure and temperature may affect the result of the hot isostatic pressing 550 greatly. In some examples, the inert gas is heated to 900 °C at a rate of 5 °C/min while the pressure is maintained at 100 MPa for 2 hours followed by a cooling at a rate of 5 °C/min.

In some other examples, the inert gas may be pressurized to at least 50 MPa and heated to at least 800 °C until the desired relative density is achieved. In some other examples, the inert gas may be pressurized to at least 100 MPa and heated to at least 900 °C until the desired relative density is achieved. In some other examples, the inert gas may be pressurized to at least 120 MPa and heated to at least 950 °C until the desired relative density is achieved. In some other examples, the inert gas may be pressurized to at least 140 MPa and heated to at most 1000 °C until the desired relative density is achieved. In some other examples, the inert gas may be pressurized to at least 160 MPa and heated to at least 1100 °C until the desired relative density is achieved. In some other examples, the inert gas may be pressurized to at least 180 MPa and heated to at most 1200 °C until the desired relative density is achieved.

Hot isostatic pressing 550 is a crucial step to achieve a higher relative density of the densified cold spray structure 108 of the wall 102. In some examples, the hot isostatic pressing 550 may yield a densified cold spray structure 108 having a relative density of at least 80 percent. In some other examples, the hot isostatic pressing 550 may yield a densified cold spray structure 108 having a relative density of at least 85 percent. In some other examples, the hot isostatic pressing 550 may yield a densified cold spray structure 108 having a relative density of at least 90 percent. In some other examples, the hot isostatic pressing 550 may yield a densified cold spray structure 108 having a relative density of at least 95 percent. In some other examples, the hot isostatic pressing 550 may yield a densified cold spray structure 108 having a relative density of at least 99 percent. In some other examples, the hot isostatic pressing 550 may yield a densified cold spray structure 108 having a relative density of at least 99.5 percent. In some other examples, the hot isostatic pressing 550 may yield a densified cold spray structure 108 having a relative density of almost 100 percent.

After the hot isostatic pressing 550, the fourth intermediate product may require further refinement through machining 560 and surface finishing 570 to achieve desired final specifications of a final product. The machining 560 is employed to ensure dimensional accuracy. This step ensures that the parts meet precise tolerances necessary for their intended applications. The surface finishing 570, which may include processes such as grinding, polishing, or coating, is then applied to enhance surface quality, remove any remaining imperfections, and achieve the required surface texture. These finishing processes including, but not limited to, machining 560 and surface finishing 570, not only improve the aesthetic appeal of the parts but also enhance their mechanical properties by eliminating surface irregularities that could act as stress concentrators. Additionally, precise machining 560 and finishing 570 are essential for ensuring proper fit and alignment in assemblies, thus contributing to the overall functionality and reliability of the final product.

Although various examples of the disclosed external pressure vessels, submersible vehicles, and methods for manufacturing external pressure vessels have been shown and described, modifications may occur to those skilled in the art upon reading the specification. The present application includes such modifications and is limited only by the scope of the claims.

The following clauses present further examples:
Clause 1. An external pressure vessel (100) comprising:
   a wall (102) defining an enclosed internal volume (106), wherein at least a portion of the wall (102) comprises a densified cold spray structure (108).
Clause 2. The external pressure vessel (100) of Clause 1 wherein the densified cold spray structure (108) of the wall (102) comprises a metallic material.
Clause 3. The external pressure vessel (100) of Clause 2 wherein the metallic material is resistant or substantially resistant to corrosion in seawater.
Clause 4. The external pressure vessel (100) of Clause 2 or Clause 3 wherein the metallic material is commercially pure titanium.
Clause 5. The external pressure vessel (100) of Clause 2 or Clause 3 wherein the metallic material comprises one of a titanium alloy and a stainless steel.
Clause 6. The external pressure vessel (100) of any preceding Clause wherein the densified cold spray structure (108) of the wall (102) has a relative density of at least 95 percent.
Clause 7. The external pressure vessel (100) of any preceding Clause wherein the densified cold spray structure (108) of the wall (102) has a relative density of at least 99 percent.
Clause 8. The external pressure vessel (100) of any preceding Clause wherein the densified cold spray structure (108) of the wall (102) has a relative density of at least 99.5 percent.
Clause 9. The external pressure vessel (100) of any preceding Clause wherein at least 50 percent of the wall (102), based on a total weight of the wall (102), comprises the densified cold spray structure (108).
Clause 10. The external pressure vessel (100) of any preceding Clause wherein at least 80 percent of the wall (102), based on a total weight of the wall (102), comprises the densified cold spray structure (108).
Clause 11. The external pressure vessel (100) of any preceding Clause wherein the wall (102), in its entirety, comprises the densified cold spray structure (108).
Clause 12. The external pressure vessel (100) of any preceding Clause wherein the wall (102) has an average cross-sectional thickness (T_{A}), and wherein the average cross-sectional thickness (T_{A}) is at least 0.25 centimeters.
Clause 13. The external pressure vessel (100) of any preceding Clause wherein the wall (102) has an average cross-sectional thickness (T_{A}), and wherein the average cross-sectional thickness (T_{A}) ranges from 0.3 centimeters to 5 centimeters , or from about 0.3 centimeters to about 5 centimeters.
Clause 14. The external pressure vessel (100) of any preceding Clause wherein the enclosed internal volume (106) is at least 25 liters.
Clause 15. The external pressure vessel (100) of any preceding Clause wherein the enclosed internal volume (106) is at least 50 liters.
Clause 16. The external pressure vessel (100) of any preceding Clause wherein the enclosed internal volume (106) is at least 100 liters.
Clause 17. The external pressure vessel (100) of any preceding Clause wherein the enclosed internal volume (106) is at least 500 liters.
Clause 18. The external pressure vessel (100) of any preceding Clause capable of withstanding an external pressure load of at least 5 bar without mechanical failure.
Clause 19. The external pressure vessel (100) of any preceding Clause capable of withstanding an external pressure of at least 10 bar without mechanical failure.
Clause 20. The external pressure vessel (100) of any preceding Clause capable of withstanding an external pressure of at least 100 bar without mechanical failure.
Clause 21. The external pressure vessel (100) of any preceding Clause capable of withstanding an external pressure of at least 500 bar without mechanical failure.
Clause 22. The external pressure vessel (100) of any preceding Clause wherein the wall (102) defines at least one port (120) that provides access to the enclosed internal volume (106), and wherein the port (120) is sealed with a plug (122).
Clause 23. The external pressure vessel (100) of any preceding Clause further comprising at least one reinforcement feature (130) positioned to reinforce the wall (102).
Clause 24. The external pressure vessel (100) of Clause 23 wherein the reinforcement feature (130) is integral with the wall (102).
Clause 25. The external pressure vessel (100) of Clause 23 or Clause 24 wherein the reinforcement feature (130) comprises a reinforcement ring (131).
Clause 26. The external pressure vessel (100) of any preceding Clause wherein the wall (102) comprises a plurality of wall segments 140, 142, 144.
Clause 27. The external pressure vessel (100) of Clause 26 wherein each wall segment 140, 142, 144 of the plurality of wall segments 140, 142, 144 is connected to an adjacent wall segment 140, 142, 144 of the plurality of wall segments 140, 142, 144 using a plurality of mechanical fasteners (146).
Clause 28. The external pressure vessel (100) of Clause 26 or Clause 27 wherein at least one wall segment 140, 142, 144 of the plurality of wall segments 140, 142, 144 is shaped as a hollow cylinder or is generally shaped as a hollow cylinder.
Clause 29. The external pressure vessel (100) of any of Clauses 26 - 28 further comprising at least one seal (148) positioned between adjacent wall segments 140, 142, 144 of the plurality of wall segments 140, 142, 144.
Clause 30. A submersible vehicle (200) comprising:
   a wet hull (202) defining an internal volume (204);
   a plurality of external pressure vessels (100A, 100B, 100C) received in the internal volume (204) of the wet hull (202), each external pressure vessel (100A, 100B, 100C) of the plurality of external pressure vessels (100A, 100B, 100C) comprising a wall (102) defining an enclosed internal volume (106), wherein at least a portion of the wall (102) comprises a densified cold spray structure (108);
   a battery (210) housed within an external pressure vessel (100A, 100B, 100C) of the plurality of external pressure vessels (100A, 100B, 100C);
   an electric motor (220) powered by the battery (210); and
   a propeller (230) driven by the electric motor (220).
Clause 31. The submersible vehicle (200) of Clause 30 wherein the densified cold spray structure (108) of the wall (102) comprises a metallic material.
Clause 32. The submersible vehicle (200) of Clause 30 or Clause 31 wherein the densified cold spray structure (108) of the wall (102) comprises commercially pure titanium.
Clause 33. The submersible vehicle (200) of any of Clauses 30 - 32 wherein the densified cold spray structure (108) of the wall (102) has a relative density of at least 99 percent.
Clause 34. The submersible vehicle (200) of any of Clauses 30 - 33 wherein each external pressure vessel (100A, 100B, 100C) of the plurality of external pressure vessels (100A, 100B, 100C) is capable of withstanding an external pressure of at least 100 bar without mechanical failure.
Clause 35. The submersible vehicle (200) of any of Clauses 30 - 23 wherein each external pressure vessel (100A, 100B, 100C) of the plurality of external pressure vessels (100A, 100B, 100C) comprises a port (120) that is sealed with a plug (122).
Clause 36. The submersible vehicle (200) of Clause 35 further comprising at least one wire extending from the enclosed internal volume (106) and through the port (120) of one external pressure vessel (100A, 100B, 100C) of the plurality of external pressure vessels (100A, 100B, 100C) through the port (120) and into the enclosed internal volume (106) of another external pressure vessel (100A, 100B, 100C) of the plurality of external pressure vessels (100A, 100B, 100C).
Clause 37. The submersible vehicle (200) of any of Clauses 30 - 36 further comprising a generator (215) for charging the battery (210), the generator (215) being housed within an external pressure vessel (100A, 100B, 100C) of the plurality of external pressure vessels (100A, 100B, 100C).
Clause 38. The submersible vehicle (200) of any of Clauses 30 - 37 further comprising a rudder (240).
Clause 39. The submersible vehicle (200) of Clause 38 wherein the rudder (240) is controlled by an electronic control unit (245) housed within an external pressure vessel (100A, 100B, 100C) of the plurality of external pressure vessels (100A, 100B, 100C).
Clause 40. A method (500) for manufacturing an external pressure vessel (100), the method (500) comprising:
   rotating (510) a mandrel in an environment comprising an inert gas;
   while the mandrel is rotating in the environment, cold spraying (520) a metallic powder onto the mandrel to yield a first intermediate product;
   removing (530) the mandrel from the first intermediate product to yield a second intermediate product;
   heat treating (540) the second intermediate product to yield a third intermediate product; and
   hot isostatic pressing (550) the third intermediate product.
Clause 41. The method (500) of Clause 40 wherein the first intermediate product has a desired general shape and a desired general size.
Clause 42. The method (500) of Clause 40 or Clause 41 wherein the inert gas is a gas selected from the group consisting of nitrogen, argon, helium, neon, and combinations thereof.
Clause 43. The method (500) of any of Clauses 40 - 42 wherein the environment is heat to an elevated temperature.
Clause 44. The method (500) of Clause 43 wherein the elevated temperature is at most 70 percent of a melting point of the metallic powder, in °C.
Clause 45. The method (500) of Clause 43 wherein the elevated temperature is at most 65 percent of a melting point of the metallic powder, in °C.
Clause 46. The method (500) of any of Clauses 40 - 45 wherein the mandrel has a composition that is different from a composition of the metallic powder.
Clause 47. The method (500) of any of Clauses 40 - 46 wherein the mandrel comprises aluminum or an aluminum alloy.
Clause 48. The method (500) of any of Clauses 40 - 47 wherein the metallic powder comprises a metallic material that is resistant or substantially resistant to corrosion in seawater.
Clause 49. The method (500) of Clause 48 wherein the metallic material is commercially pure titanium.
Clause 50. The method (500) of Clause 48 wherein the metallic material comprises one of a titanium alloy and a stainless steel.
Clause 51. The method (500) of any of Clauses 40 - 50 wherein the cold spraying (520) is performed at a surface speed ranging from 0.2 m/s to 1 m/s, or from about 0.2 m/s to about 1 m/s.
Clause 52. The method (500) of any of Clauses 40 - 51 wherein the removing (530) the mandrel comprises dissolving the mandrel.
Clause 53. The method (500) of any of Clauses 40 - 52 wherein the heat treating (540) comprising controlled heating to a target temperature according to a predefined heating rate, holding at the target temperature for a minimum amount of time, and cooling to room temperature according to a predefined cooling rate.
Clause 54. The method (500) of any of Clauses 40 - 53 wherein the hot isostatic pressing (550) yields a densified cold spray structure (108) having a relative density of at least 95 percent.
Clause 55. The method (500) of any of Clauses 40 - 54 wherein the hot isostatic pressing (550) yields a densified cold spray structure (108) having a relative density of at least 99 percent.
Clause 56. The method (500) of any of Clauses 40 - 55 wherein the hot isostatic pressing (550) yields a densified cold spray structure (108) having a relative density of at least 99.5 percent.
Clause 57. The method of any of Clauses 40 - 56 further comprising machining (560) after the hot isostatic pressing (550).
Clause 58. The method of Clause 57 further comprising surface finishing (570) after the machining (560).

## Claims

1. An external pressure vessel (100) comprising:
a wall (102) defining an enclosed internal volume (106), wherein at least a portion of the wall (102) comprises a densified cold spray structure (108).

2. The external pressure vessel (100) of Claim 1 wherein the densified cold spray structure (108) of the wall (102) comprises a metallic material, and wherein one or more of:
a) the metallic material is commercially pure titanium, or the metallic material comprises one of a titanium alloy and a stainless steel; and
b) the metallic material is resistant or substantially resistant to corrosion in seawater.

3. The external pressure vessel (100) of Claim 1 or Claim 2 wherein the densified cold spray structure (108) of the wall (102) has a relative density of one of: at least 95 percent, at least 99 percent, and at least 99.5 percent.

4. The external pressure vessel (100) of any preceding Claim wherein one of:
at least 50 percent of the wall (102), based on a total weight of the wall (102), comprises the densified cold spray structure (108);
at least 80 percent of the wall (102), based on a total weight of the wall (102), comprises the densified cold spray structure (108); and
the wall (102), in its entirety, comprises the densified cold spray structure (108).

5. The external pressure vessel (100) of any preceding Claim wherein the wall (102) has an average cross-sectional thickness (T_{A}), and wherein the average cross-sectional thickness (T_{A}):
is at least 0.25 centimeters; or
ranges from 0.3 centimeters to 5 centimeters, or from about 0.3 centimeters to about 5 centimeters.

6. The external pressure vessel (100) of any preceding Claim wherein the external pressure vessel (100) is capable of withstanding an external pressure load of one of: at least 5 bar (500 kPa) without mechanical failure, at least 10 bar (1 MPa) without mechanical failure, at least 100 bar (10 MPa) without mechanical failure, and at least 500 bar (50 MPa) without mechanical failure.

7. The external pressure vessel (100) of any preceding Claim wherein the wall (102) defines at least one port (120) that provides access to the enclosed internal volume (106), and wherein the port (120) is sealed with a plug (122).

8. The external pressure vessel (100) of any preceding Claim further comprising at least one reinforcement feature (130) positioned to reinforce the wall (102), and optionally, wherein the reinforcement feature (130) is integral with the wall (102) and/or comprises a reinforcement ring (131).

9. The external pressure vessel (100) of any preceding Claim wherein the wall (102) comprises a plurality of wall segments (140, 142, 144), and optionally, wherein one or more of:
each wall segment (140, 142, 144) of the plurality of wall segments (140, 142, 144) is connected to an adjacent wall segment (140, 142, 144) of the plurality of wall segments (140, 142, 144) using a plurality of mechanical fasteners (146);
at least one wall segment (140, 142, 144) of the plurality of wall segments (140, 142, 144) is shaped as a hollow cylinder or is generally shaped as a hollow cylinder; and
the external pressure vessel (100) further comprises at least one seal (148) positioned between adjacent wall segments (140, 142, 144) of the plurality of wall segments (140, 142, 144).

10. A submersible vehicle (200) comprising:
a wet hull (202) defining an internal volume (204);
a plurality of external pressure vessels (100A, 100B, 100C) received in the internal volume (204) of the wet hull (202), wherein each external pressure vessel (100A, 100B, 100C) of the plurality of external pressure vessels (100A, 100B, 100C) is the external pressure vessel (100) of any preceding claim;
a battery (210) housed within one of the external pressure vessels (100A, 100B, 100C) of the plurality of external pressure vessels (100A, 100B, 100C);
an electric motor (220) powered by the battery (210); and
a propeller (230) driven by the electric motor (220).

11. The submersible vehicle (200) of Claim 10 further comprising one or more of:
at least one wire extending from the enclosed internal volume (106) and through a port (120) of one of the external pressure vessels (100A, 100B, 100C) of the plurality of external pressure vessels (100A, 100B, 100C) and through a port (120) of and into the enclosed internal volume (106) of another of the external pressure vessels (100A, 100B, 100C) of the plurality of external pressure vessels (100A, 100B, 100C);
a generator (215) for charging the battery (210), the generator (215) being housed within one of the external pressure vessels (100A, 100B, 100C) of the plurality of external pressure vessels (100A, 100B, 100C); and
a rudder (240), wherein optionally, the rudder (240) is controlled by an electronic control unit (245) housed within one of the external pressure vessels (100A, 100B, 100C) of the plurality of external pressure vessels (100A, 100B, 100C).

12. A method (500) for manufacturing the external pressure vessel (100) of any of claims 1 - 9, the method (500) comprising:
rotating (510) a mandrel in an environment comprising an inert gas;
while the mandrel is rotating in the environment, cold spraying (520) a metallic powder onto the mandrel to yield a first intermediate product (700);
removing (530) the mandrel from the first intermediate product to yield a second intermediate product (800);
heat treating (540) the second intermediate product to yield a third intermediate product (1130); and
hot isostatic pressing (550) the third intermediate product.

13. The method (500) of Claim 12 wherein one or more of:
the inert gas is nitrogen, argon, helium, neon, or combinations thereof;
the environment is heated to an elevated temperature, and optionally, wherein the elevated temperature is at most 65 or 70 percent of a melting point of the metallic powder, in °C;
the mandrel has a composition that is different from a composition of the metallic powder; and
the mandrel comprises aluminum or an aluminum alloy.

14. The method (500) of Claim 12 or Claim 13 wherein one or more of:
the cold spraying (520) is performed at a surface speed ranging from 0.2 m/s to 1 m/s, or from about 0.2 m/s to about 1 m/s;
the removing (530) the mandrel comprises dissolving the mandrel;
the heat treating (540) comprising controlled heating to a target temperature according to a predefined heating rate, holding at the target temperature for a minimum amount of time, and cooling to room temperature according to a predefined cooling rate; and
the hot isostatic pressing (550) yields a densified cold spray structure (108) having a relative density of one of: at least 95 percent, at least 99 percent, and at least 99.5 percent.

15. The method of any of Claims 12 - 14 further comprising machining (560) after the hot isostatic pressing (550), and optionally, further comprising surface finishing (570) after the machining (560).
